# EUROPEAN PATENT SPECIFICATION

(11) **EP 3 751 017 B1**
(45) Date of publication and mention of the grant of the patent: **21.12.2022**
(21) Application number: 20186338.8
(22) Date of filing: 07.09.2018
(51) Int. Cl.: C23C 4/134, F01D 5/28, C23C 4/11, F01D 9/02, C23C 4/073, C23C 28/00

(54) **COATING FOR GAS TURBINE ENGINE COMPONENTS**
BESCHICHTUNG FÜR GASTURBINENMOTORKOMPONENTEN
REVÊTEMENT POUR COMPOSANTS DE MOTEUR À TURBINE À GAZ

(30) Priority: 08.09.2017 US 201715698774
(43) Date of publication of application: 16.12.2020
(62) Divisional of application: 18193136.1
(73) Proprietor: Raytheon Technologies Corporation, Farmington, CT 06032 (US)
(72) Inventor: LIU, Xuan, Glastonbury, CT 06033 (US); HAZEL, Brian T., Avon, CT 06001 (US)
(74) Representative: Dehns

(56) References cited:
- EP-A1- 2 258 889
- EP-A1- 3 165 629
- EP-A1- 3 199 505
- EP-A2- 1 731 630
- WO-A1-2013/163058
- US-A1- 2011 151 270

## Description

### BACKGROUND

This application relates to coatings, including various techniques for treating gas turbine engine components with a thermal barrier coating.

Gas turbine engines are known, and can include a fan for propulsion air and to cool components. The fan also delivers air into a core engine where it is compressed. The compressed air is then delivered into a combustion section, where it is mixed with fuel and ignited. The combustion gas expands downstream over and drives turbine blades. Static vanes are positioned adjacent to the turbine blades to control the flow of the products of combustion. The blades and vanes are subject to extreme heat.

US 2011/151270 A1 discloses methods of laser assisted plasma coating at atmospheric pressure and superalloy substrates comprising coatings made using the same.

EP 1 731 630 A2 discloses a thermal barrier coating and a process therefor.

EP 3 165 629 A1 discloses a plasma spray physical vapor deposition deposited environmental barrier coating.

EP 2 258 889 A1 discloses a method and apparatus for applying a thermal barrier coating.

WO 2013/163058 A1 discloses a method of forming a thermal barrier coating a thermal barrier coating formed thereby, and an article comprising the same.

EP 3 199 505 A1 discloses a plasma spray physical vapor deposition deposited environmental barrier coating including a layer that includes a rare earth silicate and closed porosity.

### SUMMARY

A method of treating a component for a gas turbine engine according to an aspect of the present invention is provided in accordance with claim 1.

Features of embodiments are recited in the dependent claims.

The details of one or more embodiments are set forth in the accompanying drawings and the description below. Other features, objects, and advantages will be apparent from the description and drawings, and from the claims.

### BRIEF DESCRIPTION OF THE DRAWINGS

Figure 1 illustrates a gas turbine engine.
Figure 2 schematically shows an airfoil arrangement.
Figure 3 illustrates a process for coating a component.
Figure 4A illustrate a component in a first condition.
Figure 4B illustrate the component of Figure 4A in a second condition.
Figure 5 illustrates an exemplary plot of density profiles with respect to coating particle velocity.

Like reference numbers and designations in the various drawings indicate like elements.

### DETAILED DESCRIPTION

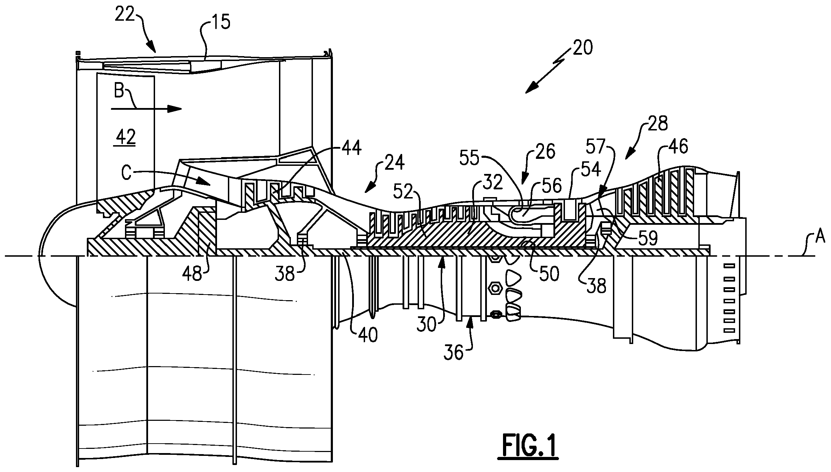

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about 6, with an example embodiment being greater than about 10, the geared architecture 48 is an epicyclic gear train, such as a planetary gear system or other gear system, with a gear reduction ratio of greater than about 2.3 and the low pressure turbine 46 has a pressure ratio that is greater than about 5. In one disclosed embodiment, the engine 20 bypass ratio is greater than about 10:1, the fan diameter is significantly larger than that of the low pressure compressor 44, and the low pressure turbine 46 has a pressure ratio that is greater than about 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}(where °R = K × 9/5). The "Low corrected fan tip speed" as disclosed herein according to one non-limiting embodiment is less than about 1150 ft / second (350.5 meters/second).

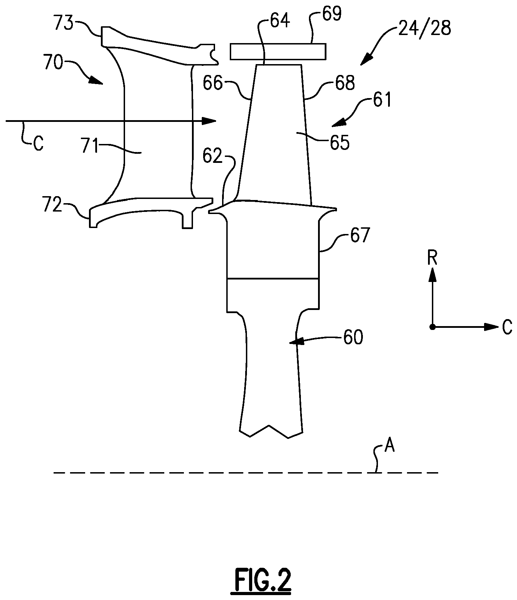

Figure 2 shows selected portions of the compressor section 24 or the turbine section 28 including a rotor 60 carrying one or more rotatable blades or airfoils 61 for rotation about the central axis A. In this example, each airfoil 61 includes a platform 62 and an airfoil section 65 extending in a radial direction R from the platform 62 to a tip 64. The airfoil section 65 generally extends in a chordwise direction C between a leading edge 66 to a trailing edge 68. A root section 67 of the airfoil 61 is mounted to the rotor 60, for example. It should be understood that the airfoil 61 can alternatively be integrally formed with the rotor 60, which is sometimes referred to as an integrally bladed rotor (IBR). A blade outer air seal (BOAS) 69 is spaced radially outward from the tip 64 of the airfoil section 65. A vane 70 is positioned along the engine axis A and adjacent to the airfoil 61. The vane 70 includes an airfoil section 71 extending between an inner platform 72 and an outer platform 73 to define a portion of the core flow path C. The section 24/28 includes multiple airfoils 61, vanes 70, and BOAS 69 arranged circumferentially about the engine axis A.

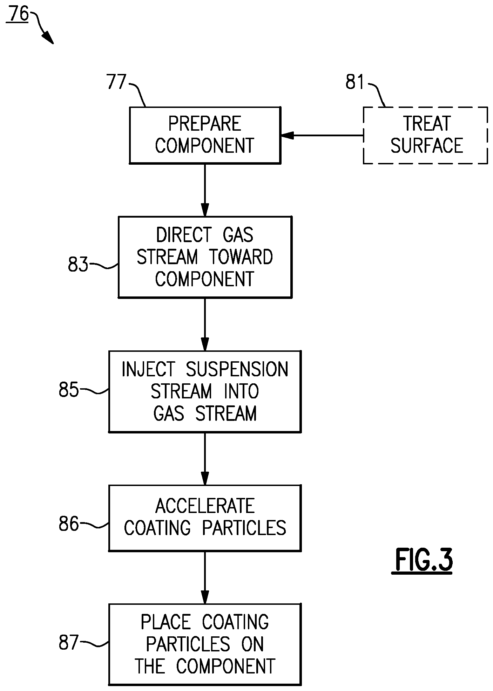

Figure 3 illustrates a process 76 for coating a component of a gas turbine engine. The process 76 comprises a suspension plasma spray (SPS) technique that utilizes a plasma gas stream to direct a liquid suspension that carries one or more coating particles to be deposited on the component for formation of a thermal barrier coating (TBC). The TBC thermally insulates the component from relatively high temperatures that may be observed in portions of the engine.

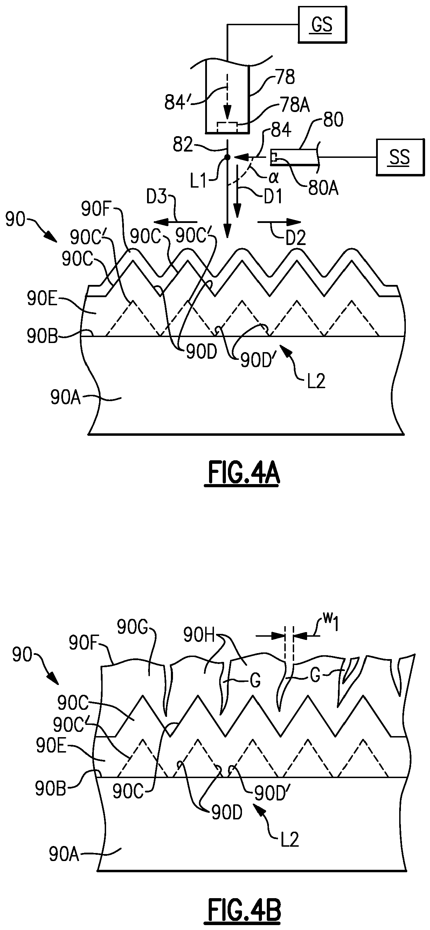

Figures 4A and 4B illustrate an example component 90 at various states or conditions with respect to process 76. The component 90 can include one or more components of the engine 20 (Figure 1), for example, including airfoils such as rotating blade or airfoil 61, static vane 70, or BOAS 69. Other example components can include combustion panels or liners that define combustion chamber 55 of combustor 56 (Figure 1).

The component 90 includes at least a substrate 90A. Example materials forming substrate 90A can include nickel-based superalloys or other high temperature materials. In some examples, the substrate 90A comprises a single crystal material or a directionally solidified material. The techniques for forming a single crystal or directionally solidified materials are known, but the use of such materials utilizing the techniques described herein are not known.

Referring to Figure 3 and Figures 4A-4B, the component 90 can be prepared as step 77. Example techniques for preparing the component 90 can include treating a surface 90B of substrate 90A at step 81. For example, the treatment step 81 can include disposing or otherwise placing a bond coat 90E on the surface 90B. The treatment step 81 can also including forming a surface texture in the bond coat 90E to form or otherwise define one or more ridges or roughness peaks 90C to form or otherwise define one or more grooves or valleys 90D. In alternative examples, the treatment step 81 can include forming a surface texture on the surface 90B of the substrate 90A to form one or more ridges 90C' and one or more valleys 90D' (shown in dashed lines), and the bond coat 90E can be omitted.

In some examples, a bond coat 90E can be disposed or otherwise placed on the surface 90B at step 81. The bond coat 90E can form an oxidation layer for oxidation resistance and can improve adhesion of the thermal barrier coating to the substrate 90A. Example bond coats can include nickel chromium aluminum yttrium (NiCrAlY), or a NiCoCrAlY alloy, for example. Other example bond coats can include MCrAlX combinations, where M = Ni, Co, Fe or a combination thereof, and X = reactive elements such as Y, Hf or Zr. Other example bond coats can include diffusion aluminides with or without platinum group metals.

Step 77 includes situating a device such as a gas torch 78 relative to the component 90, as illustrated by Figure 4A. The gas torch 78 can be coupled to a gas source (GS) that provides a quantity of gas to generate a directed flow or gas stream 82 in direction D1 at a relatively high temperature and velocity. A nozzle 78A of the gas torch 78 defines a standoff distance with respect to the substrate 90A. In the illustrated example, the gas stream is a plasma gas stream. Example plasma gases can include argon (Ar), nitrogen (N2), hydrogen (H2) or Helium (He), for example.

An injector 80 is situated adjacent to the gas torch 78, as seen in Figure 4A. The injector 80 can be coupled to a suspension source (SS) that provides a quantity of liquid suspension for injection into the gas stream 82 as a suspension jet or stream 84. In examples, the injection is an atomized injection of the suspension into the gas stream 82. In examples, the suspension may comprise between about 10-50 wt %, or more narrowly about 20-40 wt %, for yttria-stabilized zirconia (YSZ). In other examples, the suspension source (SS) provides a solution where ceramic is incorporated as a pre-ceramic material such as a nitrate/acetate that is soluble in a solvent in place of a fine powder suspended in a liquid. In some examples, the coherent stream size of the suspension stream 84 is between about 0.007-0.015 inches, and the flow rate of the suspension stream 84 is between about 25-120 mL/min, or more narrowly between about 45-100 mL/min. In some examples, the flow rate of the suspension stream 84 is greater than or equal to about 75 mL/minute, or greater than about 90 mL/min. Example injection pressures include greater than about 25 PSI (172 kPa), such as between about 30-50 PSI (207-345 kPa), or greater than about 70 PSI or 80 PSI (483-552 kPa). In some examples, the injection pressure is less than or equal to about 120 PSI (827 kPa).

The nozzle 80A of the injector 80 can be situated such that the suspension stream 84 defines an injection angle (α) that is substantially perpendicular or otherwise transverse to a major component of the gas stream 82 at injection location L1. The injection location L1 can be about 0.2 inches (5.1 mm) from the nozzle 78A, for example. In other examples, the injector 80 can be situated such that a suspension stream 84' is substantially parallel or collinear with a major component of the gas stream 82. For the purposes of this disclosure, the terms "perpendicular" and "normal" mean 90 degrees relative to a major component of the gas stream 82 unless otherwise disclosed. Also, for the purposes of this disclosure, the term "substantially" means ± 10 degrees unless otherwise disclosed. In some examples, the injector 80 can be situated such that an absolute value of the injection angle (α) between 80-85 degrees relative to a major component of the gas stream 82.

The suspension comprises a liquid for carrying coating particles to form a thermal barrier coating. The suspension liquid may comprise ethanol, for example. The liquid provides momentum to entrain the relatively fine coating particles into the high velocity gas stream 82. In the illustrated example, the coating particles comprise a ceramic material, and can have a mean size between about 10 nanometers (nm) to about 10 microns, or more narrowly between about 50 nm and 2.0 microns, when introduced in the suspension stream 84. Example ceramic coating materials comprise zirconia based and hafnia based ceramics that are partially or fully stabilized primarily by rare earth oxides, such as yttria, scandia, or any lanthanide series oxides. Some specific examples include yttria-stabilized zirconia (YSZ) or gadolinium zirconate (Gd₂Zr₂0₇). Additional example ceramic coating materials can include aluminum oxide (Al₂O₃), tantala (Ta2O5) or niobia (Nb2O5). For the purposes of this disclosure, the term "about" means ±5% unless otherwise disclosed.

At step 83, the gas stream 82 is directed toward a localized region of the component 90. At step 85, the suspension stream 84 including coating particles is injected into the gas stream 82 at injection location L1. In some examples, a velocity of the suspension stream 84 at the injection location L1 is between about 10-40 meters/second, or more narrowly about 15-35 meters/second, at the injection location L1 prior to being influenced by the gas stream 82. At step 86, the coating particles in the suspension stream 84 are accelerated in the gas stream 82 in direction D1 toward the component 90. The relative momentum difference between the two streams 82, 84 causes a break-up of the suspension stream 84 into droplets. Exposure to the relatively high temperatures of the gas stream 82 cause substantially all of the liquid portion of the suspension stream 84 to evaporate, and cause at least some or most of the coating particles to melt.

At step 87, the coating particles are deposited or otherwise placed onto the component 90 at coating location L2. The coating location L2 is a localized area or region of the component 90 situated at an intersection of the gas stream 82. Although coating location L2 can be a single point defined along an axis of the nozzle 78A of the gas torch 78, the coating location L2 can include a localized region due to dispersion of some of the coating particles carried by the gas stream 82. For example, some coating particles or droplets can move tangentially in directions D2 and/or D3 (Figure 4A) due to flow of the gas stream 82 along surfaces of the component 90. The coating particles collect on surfaces of the component 90 to form a top coat 90F (Figure 4A). The top coat 90F can be made of a single layer, or can be made of two or more layers of material, such as between about 30-80 layers, by repeating steps 83 to 87 to form multiple layers at the coating location L2. Steps 83 to 87 can be repeated for different coating locations L2 to at least partially or substantially coat surfaces of the component 90. Example surface speeds of the substrate 90A relative to the nozzle 78A include greater than about 750 in/min (19.1 m/min), such as between about 1300-2300 in/min (33.0 - 58.4 m/min).

Coating particles that comprise the top coat 90F form a columnar microstructure 90G at the coating location L2, as illustrated by Figure 4B. The columnar microstructure 90G can define an external surface of the component 90. The columnar microstructure 90G defines one or more intersegment gaps G extending between one or more elongated columns 90H. The gaps G have a major component that extends in a direction from an exposed surface of the top coat 90F toward the substrate 90A. The gaps G can provide durability for responding to thermal expansion and contraction caused by temperature changes during operation of the engine 20. However, debris can collect in the gaps G during operation of the engine 20, which can cause spallation or otherwise reduce the insulative properties of the thermal barrier coating.

Utilizing the techniques described herein, the coating particles collect on the peaks 90C and form voids in adjacent valleys 90D, thereby reducing peak shadowing or coating buildup in the valleys 90D. The coating particles comprising the columns 90H can be more densely packed, which can improve durability of the columnar microstructure 90G. For example, each of the gaps G defines a corresponding surface gap width W1. The gap widths W1 can be the same or can vary along a vertical height of the columnar microstructure 90G depending on interaction with neighboring columns 90H.

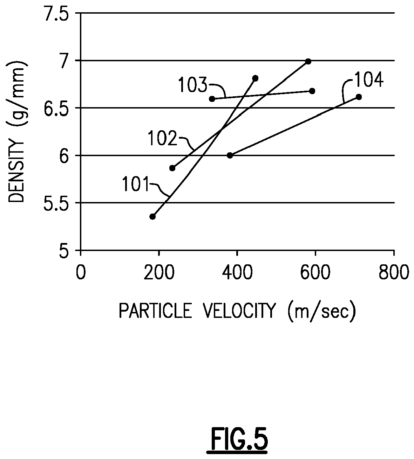

Figure 5 illustrates an exemplary plot of density profiles including curves 101-104 with respect to coating particle velocity. For the purposes of this disclosure, density is defined as weight divided by coating thickness. Particle velocities disclosed in Figure 5 are of gadolinium zirconate (Gd2Zr2O7) and were measured using a Tecnar Accuraspray system at a 3.25 inch (8.26 cm) standoff distance. In some examples, a density of the columnar microstructure 90G is greater than or equal to about 5.0 grams per millimeter, or more narrowly less than or equal to about 7.0 grams per millimeter. The density can be between about 5.5-6.7 grams per millimeter, or more narrowly between about 5.8 and about 6.6 grams per millimeter, as illustrated by curves 101-104. In examples, the density is between about 6.0-6.6 for maximum particle velocities between about 400-750 meters per second, as illustrated by curve 104.

The exemplary densities described herein can be associated with an intercolumnar or intracolumnar porosity of the columnar microstructure 90G. For the purposes of this disclosure, porosity is measured with respect to a percentage void area by image analysis on micrographs at 250 times magnification. Voids in the imagery of less than 2 square microns are associated with columns 90H, and voids greater than or equal to 2 square microns are associated with intersegment gaps G in the columnar microstructure 90G. An intercolumnar porosity of the columnar microstructure 90G is less than about 25 percent, or in some examples, more narrowly, about 10-20 percent or between about 12-17 percent, inclusive of intersegment gaps G in the columnar microstructure 90G.

Intracolumnar porosity of the columnar microstructure 90G can be reduced to increase the durability of the TBC. For example, intracolumnar porosity can be concentrated in interpass boundaries defined by layers of the coating particles from each pass. These boundaries with higher porosity can act as weak planes within the TBC and parallel to the interface that can reduce durability of the TBC. Reducing this interpass boundary accumulation of porosity or total intracolumnar porosity can increase durability of the TBC with respect to mechanically and thermally induced strain. An intracolumnar porosity of the columnar microstructure 90G is below 7 percent, exclusive of the intersegment gaps G but inclusive of the columns 90H. The density and porosity values disclosed herein can improve durability of the component 90 and can reduce ingestion of debris in the columnar microstructure 90G, for example.

Various techniques can be utilized to increase density and/or reduce porosity of the columnar microstructure 90G, including driving higher energy into the coating particles between injection of the suspension stream 84 and contact with the target surface at the coating location L2. Techniques for increasing the energy can include increasing a kinetic and/or thermal energy of the coating particles or associated droplets.

Relatively higher gas velocities can result in a relatively higher droplet to gas momentum ratio. This can cause the droplets to impact the surface of the substrate 90A at relatively larger (e.g., perpendicular) angles and/or velocities which can increase a packing density of the columns 90H that result from the droplets interacting with the peaks 90C, as compared to impacting surfaces of the substrate 90A at relatively shallow (e.g., tangential) angles or lower velocity. Relatively shallow angles can result in peak shadowing of the valleys 90D. Since the droplets have a relatively larger mass than the gas particles, the droplets that are accelerated prior to impact at the coating location L2 are more difficult to deflect from their impact trajectory by the low mass gas and have higher kinetic energy for compaction on impact. It may be desirable to keep the maximum particle velocity within a particular range, or below a threshold value, to allow for some tangential flow of the droplets relative substrate and shadowing of droplets in the valleys 90D to provide a desired density and porosity of the columnar microstructure 90G.

The kinetic energy and velocity of the coating particles can be increased by adjusting the power level, gas flow rates and/or an opening of nozzle 78A of the gas torch 78. Relatively higher mass gases or mixtures, such as relatively higher amounts of Argon (Ar) or Nitrogen (N2) and lesser amounts of Hydrogen (H2), can be utilized to increase coating particle speeds and kinetic energy at a time of impact with the substrate. In some examples, the gas torch 78 is operable to deliver about 450-600 SCFH of a mixture of Argon (Ar)/Nitrogen (N2)/Hydrogen (H2). In one example, the gas torch 78 is operable to deliver about 565 SCFH of a mixture of Ar/N2/H2 (about 300/160/105 SCFH, respectively), with a diameter of the nozzle 78A being about 0.45 centimeters. Example power levels include between about 80-120 kW, such as between about 100-120 kW for yttria-stabilized zirconia or between about 90-110 kW for other zirconates.

Other techniques for increasing gas volume and a velocity of the coating particles can also include changing a diameter of the nozzle 78A of the gas torch 78, with relatively smaller diameters having relatively high particle velocities and/or temperatures. In some examples, a diameter of the nozzle 78A is between about 0.2-0.6 centimeters, or more narrowly between about 0.25-0.45 centimeters.

In some examples, the coating particles are accelerated in the gas stream 82 to a maximum velocity of greater than about 470 or 500 meters per second, or more narrowly less than or equal to about 650 or 700 meters per second. In other examples, the maximum velocity is less than about 600 meters per second, such as between about 550-560 meters per second. The maximum velocities may correspond to coating particles comprising a ceramic material such as gadolinium zirconate (Gd₂Zr₂0₇), for example. In some examples, the standoff distance is at least about about 2.5 inches (6.35 cm), or more narrowly between about 3.0-4.0 inches (7.6 - 10 cm).

Increasing a temperature of the coating particles can also increase a thermal energy of the droplets. Increased thermal energy of the coating particles can cause the associated droplets to more completely interact with the target surface prior to solidification of the droplets, thereby achieving a relatively denser TBC. Increasing the velocity of the coating particles can also increase the maximum temperature of coating particles. Techniques for increasing the temperature of the coating particles can include increasing the power of the gases forming the gas stream 82, and also by reducing the standoff distance between the nozzle 78A of the gas torch 78 and the substrate, for example.

In some examples, after injection of the suspension stream 84 into the gas stream 82, the coating particles are heated in the gas stream 82 to an average particle temperature that is greater than or equal to about 3000 or about 3250 degrees Celsius, or more narrowly less than 3500 degrees Celsius. In some examples, the average particle temperature is greater than about 3300 or about 3400 degrees Celsius. In other examples, the average particle temperature is less than about 3400 degrees Celsius, such as between 3100 and 3200 degrees Celsius.

It should be understood that the maximum velocities disclosed herein are measured without a substrate situated in place relative to the gas torch 78, and do not reflect any backpressure from exertion of gases on the substrate.

Utilizing the techniques disclosed herein, increased particle temperatures, increased particle velocities and/or standoff distances can be selected to more densely pack the columns 90H of the columnar microstructure 90G. This can improve column toughness, improve coating strain tolerance, and reduce porosity of the columnar microstructure 90G, thereby improving durability of the TBC and the component 90.

One or more embodiments have been described. Nevertheless, it will be understood that various modifications may be made. For example, when reengineering from a baseline engine configuration, details of the baseline may influence details of any particular implementation. Accordingly, other embodiments are within the scope of the following claims.

## Claims

1. A method of treating a component (90) for a gas turbine engine (20) comprising:
injecting a suspension stream (84) into a plasma gas stream (82), the suspension stream (84) including coating particles;
moving the coating particles in the gas stream (82) toward a component (90); and
placing the coating particles on the component (90) at a coating location (L2) to form a top coat (90F) having a columnar microstructure (90G) including one or more elongated columns (90H) separated by intersegment gaps (G) defined in the columnar microstructure (90G) extending between the columns (90H), such that an intracolumnar porosity of the columnar microstructure (90G) is between 4.0-7.0 percent, exclusive of the intersegment gaps (G) but inclusive of the columns (90H);
**characterized in that**:
an intercolumnar porosity of the columnar microstructure (90G) is less than 25 percent, inclusive of the intersegment gaps (G).

2. The method as recited in claim 1, wherein the coating particles comprise a ceramic material, for example, gadolinium zirconate (Gd₂Zr₂0₇).

3. The method as recited in claim 1 or 2, wherein the step of moving includes accelerating the coating particles in the gas stream (82) to a maximum velocity of greater than 500 meters per second.

4. The method as recited in claim 1, 2 or 3, wherein the maximum velocity of the coating particles in the gas stream (82) is less than 700 meters per second.

5. The method as recited in any preceding claim, wherein the step of moving includes heating the coating particles to an average particle temperature of greater than 3250 degrees Celsius.

6. The method as recited in any preceding claim, wherein the average particle temperature is less than 3500 degrees Celsius.

7. The method as recited in any of claims 1 to 4, wherein the average particle temperature is between 3300 and 3500 degrees Celsius.

8. The method as recited in any preceding claim, wherein the porosity is measured with respect to a percentage void area by image analysis on micrographs at 250 times magnification.

9. The method as recited in any preceding claim, wherein the intercolumnar porosity of the columnar microstructure (90G) is between 15-25 percent, inclusive of the intersegment gaps (G).

10. The method as recited in any preceding claim, wherein the intracolumnar porosity of the columnar microstructure (90G) is less than 6.5 percent, exclusive of the intersegment gaps (G).

11. The method as recited in any preceding claim, wherein the intracolumnar porosity of the columnar microstructure (90G) is less than 6.0 percent, exclusive of the intersegment gaps (G).

12. The method as recited in any preceding claim, wherein the step of moving includes a standoff distance that is at least about 2.5 inches (6.35 cm).

13. The method as recited in any preceding claim, wherein the component (90) is a blade outer air seal (69), a rotatable blade (61), a static vane (70), a combustion panel, or a combustion liner for a gas turbine engine (20).

14. The method as recited in any preceding claim, further comprising the step of placing a bond coat (90E) onto a substrate (90A) of the component (90).

15. The method as recited in claim 14, wherein the bond coat (90E) defines a plurality of ridges (90C).

## Patentansprüche

1. Verfahren zum Behandeln einer Komponente (90) für ein Gasturbinentriebwerk (20), umfassend:
Einspritzen eines Suspensionsstroms (84) in einen Plasmagasstrom (82), wobei der Suspensionsstrom (84) Beschichtungspartikel einschließt;
Bewegen der Beschichtungspartikel in dem Gasstrom (82) in Richtung einer Komponente (90); und
Platzieren der Beschichtungspartikel auf der Komponente (90) an einer Beschichtungsstelle (L2), um eine Deckschicht (90F) zu bilden, die eine säulenförmige Mikrostruktur (90G) aufweist, die eine oder mehrere längliche Säulen (90H) einschließt, die durch Spalte (G) zwischen Segmenten getrennt sind, die in der säulenförmigen Mikrostruktur (90G) definiert sind und sich zwischen den Säulen (90H) erstrecken, sodass eine intrakolumnare Porosität der säulenförmigen Mikrostruktur (90G) zwischen 4,0-7,0 % beträgt, ausschließlich der Spalte (G) zwischen den Segmenten, aber einschließlich der Säulen (90H);
**dadurch gekennzeichnet, dass**:
eine intrakolumnare Porosität der säulenförmigen Mikrostruktur (90G) geringer als 25 Prozent ist, einschließlich der Spalte (G) zwischen den Segmenten.

2. Verfahren nach Anspruch 1, wobei die Beschichtungspartikel ein Keramikmaterial, zum Beispiel Gadoliniumzirkonat (Gd₂Zr₂0₇), umfassen.

3. Verfahren nach Anspruch 1 oder 2, wobei der Schritt des Bewegens Beschleunigen der Beschichtungspartikel in dem Gasstrom (82) auf eine maximale Geschwindigkeit von mehr als 500 Meter pro Sekunde einschließt.

4. Verfahren nach Anspruch 1, 2 oder 3, wobei die maximale Geschwindigkeit der Beschichtungspartikel in dem Gasstrom (82) kleiner als 700 Meter pro Sekunde ist.

5. Verfahren nach einem der vorhergehenden Ansprüche, wobei der Schritt des Bewegens Erwärmen der Beschichtungspartikel auf eine durchschnittliche Partikeltemperatur von mehr als 3250 Grad Celsius einschließt.

6. Verfahren nach einem der vorhergehenden Ansprüche, wobei die durchschnittliche Partikeltemperatur kleiner als 3500 Grad Celsius ist.

7. Verfahren nach einem der Ansprüche 1 bis 4, wobei die durchschnittliche Partikeltemperatur zwischen 3300 und 3500 Grad Celsius liegt.

8. Verfahren nach einem der vorhergehenden Ansprüche, wobei die Porosität in Bezug auf eine Fläche des Prozentsatzes der Hohlräume durch Bildanalyse auf Mikroaufnahmen mit 250-facher Vergrößerung gemessen wird.

9. Verfahren nach einem der vorhergehenden Ansprüche, wobei die intrakolumnare Porosität der säulenförmigen Mikrostruktur (90G) zwischen 15-25 Prozent liegt, einschließlich der Spalte (G) zwischen Segmenten.

10. Verfahren nach einem der vorhergehenden Ansprüche, wobei die intrakolumnare Porosität der säulenförmigen Mikrostruktur (90G) kleiner als 6,5 Prozent ist, ausschließlich der Spalte (G) zwischen Segmenten.

11. Verfahren nach einem der vorhergehenden Ansprüche, wobei die intrakolumnare Porosität der säulenförmigen Mikrostruktur (90G) kleiner als 6,0 Prozent ist, ausschließlich der Spalte (G) zwischen Segmenten.

12. Verfahren nach einem der vorhergehenden Ansprüche, wobei der Schritt des Bewegens einen Arbeitsabstand einschließt, der mindestens ungefähr 2,5 Zoll (6,35 cm) beträgt.

13. Verfahren nach einem der vorhergehenden Ansprüche, wobei die Komponente (90) eine äußere Laufschaufelluftdichtung (69), eine drehbare Laufschaufel (61), eine Leitschaufel (70), eine Brennkammerwand oder eine Brennkammerauskleidung für ein Gasturbinentriebwerk (20) ist.

14. Verfahren nach einem der vorhergehenden Ansprüche, ferner umfassend den Schritt eines Platzierens einer Bindungsschicht (90E) auf einem Substrat (90A) der Komponente (90).

15. Verfahren nach Anspruch 14, wobei die Bindungsschicht (90E) eine Vielzahl von Erhöhungen (90C) definiert.

## Revendications

1. Procédé de traitement d'un composant (90) pour un moteur à turbine à gaz (20) comprenant :
l'injection d'un courant de suspension (84) dans un courant de plasma gazeux (82), le courant de suspension (84) comportant des particules de revêtement ;
le déplacement des particules de revêtement dans le courant gazeux (82) vers un composant (90) ; et
le placement des particules de revêtement sur le composant (90) au niveau d'un emplacement de revêtement (L2) pour former un revêtement supérieur (90F) ayant une microstructure colonnaire (90G) comportant une ou plusieurs colonnes allongées (90H) séparées par des espaces intersegmentaires (G) définis dans la microstructure colonnaire (90G) s'étendant entre les colonnes (90H), de sorte qu'une porosité intra-colonnaire de la microstructure colonnaire (90G) se situe entre 4,0 et 7,0 pour cent, à l'exclusion des espaces intersegmentaires (G) mais y compris les colonnes (90H) ;
**caractérisé en ce que** :
une porosité intra-colonnaire de la microstructure colonnaire (90G) est inférieure à 25 pour cent, y compris les espaces intersegmentaires (G).

2. Procédé selon la revendication 1, dans lequel les particules de revêtement comprennent un matériau céramique, par exemple du zirconate de gadolinium (Gd₂Zr₂0₇).

3. Procédé selon la revendication 1 ou 2, dans lequel l'étape de déplacement comporte l'accélération des particules de revêtement dans le courant gazeux (82) à une vitesse maximale supérieure à 500 mètres par seconde.

4. Procédé selon la revendication 1, 2 ou 3, dans lequel la vitesse maximale des particules de revêtement dans le courant gazeux (82) est inférieure à 700 mètres par seconde.

5. Procédé selon une quelconque revendication précédente, dans lequel l'étape de déplacement comporte le chauffage des particules de revêtement à une température moyenne des particules supérieure à 3 250 degrés Celsius.

6. Procédé selon une quelconque revendication précédente, dans lequel la température moyenne des particules est inférieure à 3 500 degrés Celsius.

7. Procédé selon l'une quelconque des revendications 1 à 4, dans lequel la température moyenne des particules se situe entre 3 300 et 3 500 degrés Celsius.

8. Procédé selon une quelconque revendication précédente, dans lequel la porosité est mesurée en fonction d'un pourcentage de surface vide par analyse d'image sur micrographes avec un grossissement de 250 fois.

9. Procédé selon une quelconque revendication précédente, dans lequel la porosité intra-colonnaire de la microstructure colonnaire (90G) se situe entre 15 et 25 pour cent, y compris les espaces intersegmentaires (G).

10. Procédé selon une quelconque revendication précédente, dans lequel la porosité intra-colonnaire de la microstructure colonnaire (90G) est inférieure à 6,5 pour cent, à l'exclusion des espaces intersegmentaires (G).

11. Procédé selon une quelconque revendication précédente, dans lequel la porosité intra-colonnaire de la microstructure colonnaire (90G) est inférieure à 6,0 pour cent, à l'exclusion des espaces intersegmentaires (G).

12. Procédé selon une quelconque revendication précédente, dans lequel l'étape de déplacement comporte une distance d'écartement qui est d'au moins environ 2,5 pouces (6,35 cm).

13. Procédé selon une quelconque revendication précédente, dans lequel le composant (90) est un joint d'étanchéité à l'air extérieur de pale (69), une pale rotative (61), une aube statique (70), un panneau de combustion ou une chemise de combustion pour un moteur à turbine à gaz (20).

14. Procédé selon une quelconque revendication précédente, comprenant en outre l'étape de placement d'un revêtement de liaison (90E) sur un substrat (90A) du composant (90).

15. Procédé selon la revendication 14, dans lequel le revêtement de liaison (90E) définit une pluralité de nervures (90C) .
